# EUROPEAN PATENT SPECIFICATION

(11) **EP 3 787 220 B1**
(45) Date of publication and mention of the grant of the patent: **12.04.2023**
(21) Application number: 19194859.5
(22) Date of filing: 02.09.2019
(51) Int. Cl.: H04L 9/08, H04J 3/06

(54) **QUANTUM COMMUNICATION SYNCHRONIZATION AND ALIGNMENT PROCEDURE**
QUANTENKOMMUNIKATIONSSYNCHRONISATION UND AUSRICHTUNGSVERFAHREN
PROCÉDURE DE SYNCHRONISATION ET D'ALIGNEMENT DE COMMUNICATION QUANTIQUE

(43) Date of publication of application: 03.03.2021
(73) Proprietor: ID Quantique S.A., 1227 Carouge (CH)
(72) Inventor: WALENTA, Nino, 1205 Geneva (CH)
(74) Representative: KATZAROV S.A.

(56) References cited:
- EP-A2- 0 269 974
- US-A1- 2008 037 790
- US-A1- 2017 230 174
- FUJIWARA YUICHIRO: "Parsing a Sequence of Qubits", IEEE TRANSACTIONS ON INFORMATION THEORY, IEEE PRESS, USA, vol. 59, no. 10, 1 October 2013 (2013-10-01), pages 6796-6806, XP011526788, ISSN: 0018-9448, DOI: 10.1109/TIT.2013.2272695 [retrieved on 2013-09-11]

## Description

### Technical field of the invention

The present invention relates to a device and a method carrying out a synchronization method, in particular an alignment method for quantum communication. More particularly, the present invention relates to a device and a method carrying out an index alignment procedure capable of aligning the indices of a train of quantum states that are transmitted and detected in quantum communication.

### Background of the invention

As an example of a quantum communication method, quantum cryptography or quantum key distribution, in the following also referred to as QKD, is a method allowing the distribution of a secret key between two distant parties, the emitter and the receiver, with information theoretically provable security. Quantum key distribution relies on quantum physics principles for encoding information in quantum states as opposed to classical communication's encoding of bits. Usually, photons are used as carriers of these quantum states. Quantum key distribution exploits certain properties of these quantum states to ensure its security.

More particularly, the security of this method comes from the fact that the measurement of an unknown state of a quantum system modifies the system itself. In other words, a spy eavesdropping on a quantum communication channel cannot get information on the key without introducing errors in the key exchanged between the emitter and the receiver, thereby enabling the user to measure and eliminate the amount of information leakage by any eavesdropping attempt.

The encryption devices enable secure transmission of useful payload by performing symmetric encryption using the keys exchanged by quantum key distribution. Specific quantum key distribution systems are described for instance in US 5,307,410, and in the article by C. H. Bennett entitled "Quantum cryptography using any two non-orthogonal states", Phys. Rev. Lett. 68, 3121 (1992).

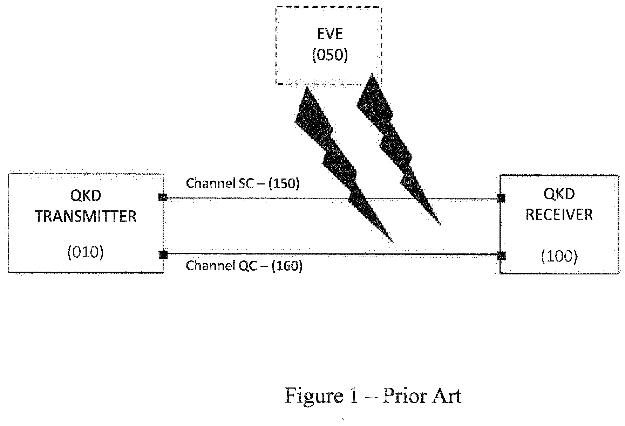

A common implementation of a quantum key distribution system, as reported in Figure 1, comprises a transmitter station (010), a receiver station (100), both linked by a quantum communication channel (QC 160), for instance an optical fiber or free-space channel where photonic quantum states, such as single photons, or weak laser pulses, are used as carriers of quantum information and a service channel (SC 150), for instance a standard optical telecommunication channel. The bits composing the quantum key are encoded onto the quantum states and transmitted over the quantum communication channel. The proper operation and functioning of the device over the quantum channel then require that each detection event of a quantum state in the receiving station can be reliably and unambiguously attributed to the corresponding preparation event of that quantum state in the transmitter station, and vice versa. This requires proper synchronization of the clocks between the transmitter and receiver station, as well as correct alignment of the index numbers that are attributed to each quantum state at the transmitter station and the receiver station.

In general, both the preparation and detection event times are therefore discretized and expressed as time-bins. In order to unambiguously relate each individual signal prepared by the transmitter station and transmitted through the quantum channel to the corresponding detection event by the receiver station, it is required that the indices of each quantum channel signal are well-synchronized between the transmitter and the receiver station.

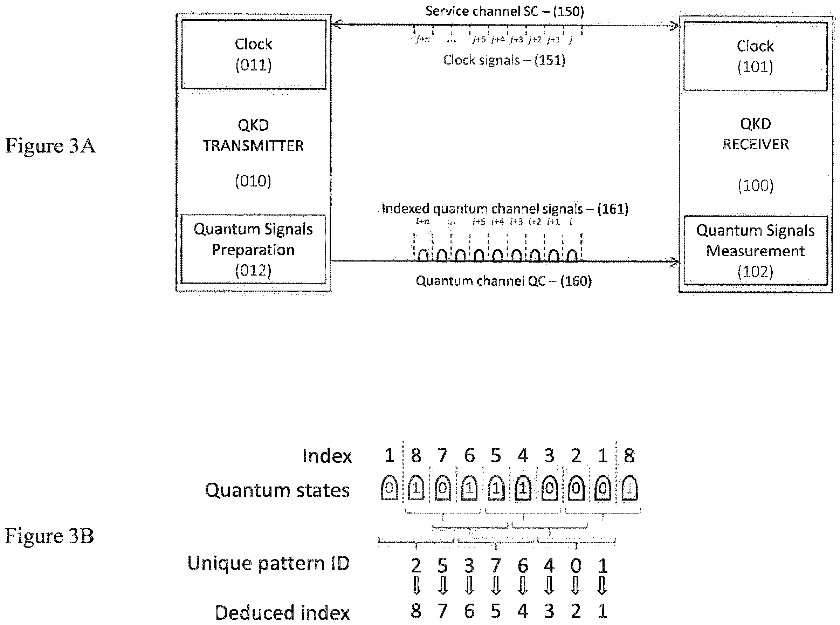

Therefore, for practical implementations of QKD and other quantum communication systems, the synchronization and alignment between both a quantum communication channel (QC) and a service channel (SC) is crucial. The synchronization guarantees that the clocks at the transmitter (011) and the receiver (101) run with exactly the same frequency, while the alignment of the quantum signals' indices assures that each detection event at the receiver is attributed correctly to the corresponding preparation event by the transmitter. In other words, the alignment of the channels means knowing precisely when the bit number "i" is expected to arrive at the receiver with respect to the *j^{th}* clock signal (151) such that the receiver is able to recognize that bit number "*i*" has been received and prevent the case where he confounds between different bits as shown in figure 3A.

In contrast to conventional communication systems, in quantum communication specific challenges arise since not every quantum state is detected at the receiver station due to inherent losses of the quantum channel as well as technical limitations such as detection efficiency or holdoff-times of the quantum receiver station. Therefore, instead of a binary symmetric channel, a quantum channel is rather described as a binary symmetric erasure channel with a high crossover and a high deletion probability. In consequence, alignment schemes that are typically used in conventional communication devices are not applicable in quantum communications.

Conventional synchronization and alignment techniques, such as data and clock recovery technique, are thus inefficient in the case of the quantum channel as reported in the following patent literature: US patent application 2012/0294625, US Patent 8,755,687. A common solution is to equip the QKD apparatus with three channels, one of which is fully dedicated to establishing and maintaining the synchronization and alignment of the quantum channel. Different descriptions of approaches of QKD apparatus implementing 3 channels are proposed in several patents such as US patents 5.768.378 / 6.834.367 / 7.539.314 / 7.869.599 / 8.050.566 / 8.755.687 as well as published US patent applications 2006/0018475 and 2012/0294625.

An objective of the present invention is therefore to provide an improved alignment method than the ones described in the abovementioned literature. However, since the number of commercial quantum communication systems is very limited to date and since there are only very few synchronization and alignment schemes that have been implemented so far, a commonly adopted approach for synchronization and alignment is to subdivide the sequence of quantum states during the alignment phase at start-up into a certain number of frames that each contain a fix number of quantum channel signals. This train of frames is repeatedly transmitted through the quantum channel, and upon detection the receiving station calculates a histogram of the detection times and tries to deduce the frame.

A particular example of a QKD system and method with the above mentioned approach has been proposed e.g. in EP patent 3,018,840 A1, which performs the synchronization of the quantum channel using the additional classical service channel and by linking the frequency of both the quantum and the classical channels. With this procedure, the QKD emitter and receiver are firstly synchronized in frequency during the start-up phase using the clock signal that is transmitted by the service channel and recovered by the receiver. Once synchronized, the clocks subsequently remain synchronous between transmitter and receiver by means of the service channel clock recovery during the whole QKD operation.

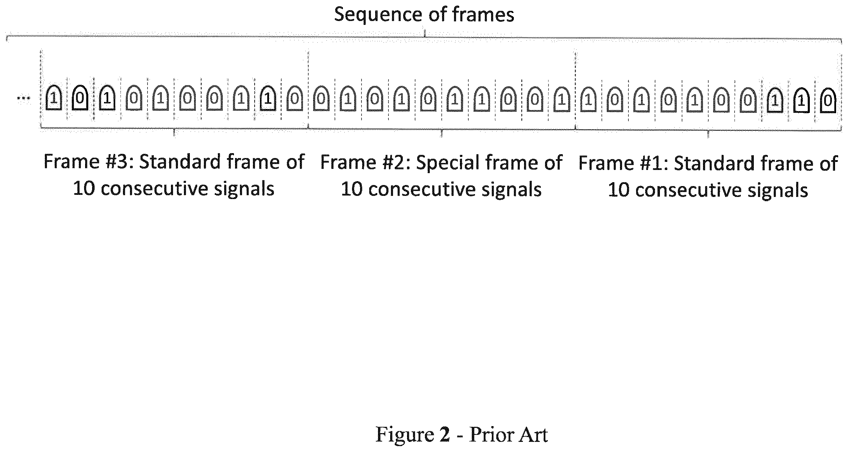

After the clock frequency is synchronized, the indices of the quantum channel signals have to be aligned. A common alignment method used for the quantum channel is depicted in FIG. 2 based on the approach of pattern recognition, i.e. the emitter transmits repeatedly a specific sequence that is sub-divided into *m* frames of fix length, with each frame being constituted by *s* consecutive quantum channel signals such that the whole sequence has a pre-determined length of in total *n* = *m* · *s* optical quantum channel signals. In a first step the correct starting point of a frame within the sequence has to be determined by repeatedly measuring from a random starting point the pattern of *s* consecutive signals and then determining the necessary shift of the starting point index such that the measured pattern corresponds to one of the expected frame patterns. In some embodiments, this step is combined with the adjustment of a digital delay of the detection signals in order to exactly center the detection signals with respect to the valid time windows given by the receiver's clock. After this step the receiver knows that his measured pattern is aligned with a starting point of a frame, but if the pattern of the measured frame is not unique within the whole alignment sequence, then he still doesn't know unambiguously which particular frame in the whole sequence he exactly measured. This is achieved in a second step where the frame pattern is measured while the starting point is shifted frame by frame until a unique and distinct pattern has been identified, its corresponding position in the whole sequence determined, and the alignment succeeded.

Once the alignment phase has been completed and the key exchange started, the system performs a continuous tracking of the quantum communication channel alignment, by means of an oversampling method, in order to compensate any temporal drift that may occur. In fact, by oversampling the detections, an analysis of the number of detections that occur outside the expected time windows when quantum states are not supposed to impinge the detector allows extrapolation of the alignment mismatch, which can be corrected with a phase adaptation, and the system is kept synchronized and aligned while running. Only if the tracking algorithm fails to identify and compensate a sudden and considerable fiber length change, the key exchange has to be interrupted and the alignment procedure re-started.

A method and apparatus for synchronizing a start-point of quantum data is disclosed in US 2017/230174 A1.

A technical problem of this alignment procedure consisting in two separated alignment steps is that it takes very long because it requires per detector two "scans" of the alignment delay until the correct starting point and frame pattern has been identified. With current techniques, iterative scans of the alignment are performed until the correct frame is identified. Moreover, due to the quantum nature of the signal, the latter has a low intensity, moreover the detection is poor, causing consequently the iterative scans to be many. Lastly, since not every frame is uniquely different with respect to the other frames in the whole sequence, the method is not very efficient in locating a particular unique frame within the whole alignment sequence. This results in a duration for the synchronization reaching up to 30 minutes. Therefore, there is a need to reduce the time necessary for the quantum communication system to synchronize and align.

An objective of the present invention is therefore to provide a system and a method permitting faster alignment by (i) eliminating the need of the first step of identifying the frames starting points, (ii) eliminating the need of iteratively scanning the frames during the second step. Consequently, an object of the system and the method of the present invention is to allow to globally reduce the time required to synchronize and align a quantum communication system. Accordingly, the quantum communication apparatus will be synchronized in much less time, approximately 50% time saving.

### Summary of the invention

The invention is based on the general approach that the whole sequence employed for performing the alignment is based on the characteristics of Hamilton-Cyclic sequences that is not sub-divided into frames.

In the present invention a Hamilton-Cyclic sequence is a sequence of quantum channel signals with a specific pattern encoded onto them which is transmitted repeatedly and where each sub-sequence of pre-determined length within the whole sequence has a pattern which is unique within in the entire chain. The total length of the whole sequence *n* depends on the length *k* of the sub-sequences as *n* = 2*^{k}*, and the longer the total sequence, the longer the sub-sequence that has to be measured. Since the pattern of each sub-sequence is unique, measuring a single sub-sequence is sufficient to deduce the position of this sub-sequence within the whole sequence, and therefore enough to determine the starting point and respective alignment index solely from the measurement of a single pattern. For any given total sequence length n there are multiple possible Hamilton-Cyclic sequences that are all equally applicable for the purpose of quantum channel alignment, and for the purpose of this description only one exemplary sequence will be given and discussed.

More particularly, the Hamilton-Cyclic sequence consists of a pattern sequence encoded on the quantum channel signals during alignment which is created in such a way that each and every sub-sequence of for example length *k* = 10 has a pattern that is individually unique and, hence, measuring the pattern of any 10 consecutive signals with arbitrary starting point is sufficient to exactly determine the index of the starting point and, hence, align the quantum channel indices. In such way the Hamilton-Cyclic sequence requires to perform only one measurement per detector during which a unique pattern can be correctly identified and therefore indexed precisely, since the pattern is unique.

Since only one scan is required to achieve alignment, the duration of the alignment procedure is reduced by at least 50%. The total time required for this phase is approximately equivalent to the first step in the conventional approach described above.

In more detail, the general idea of the invention is the following.

Upon clock synchronization during the start-up phase, when the emitter and the receiver have to be aligned, the transmitter produces and repeatedly transmits a sequence of quantum channel signals which is generated in such a way that each sub-sequence of pre-determined length is unique within the whole sequence so as the whole sequence presents a Hamilton-Cyclic pattern. Consequently, a single measurement gives a direct indication of the current position within the train of quantum states since the encoded pattern of each sub-sequence is uniquely linked to a specific starting point of the quantum channel indices. In other word, when the receiver obtains a specific pattern, since the pattern at any starting point is unique, it is easy for the system to deduce the starting point directly from the measured, unique pattern, and therefore to align the indices and to succeed with the quantum channel alignment.

At the end, only a single measurement has to be performed for identifying the exact time-bin alignment starting point in the sequence.

Therefore, the invention solves the technical problem of providing a quantum communication alignment apparatus, which enables a fast alignment, to avoid the many measurement iterations with large data.

### Brief description of the drawings

The invention will be described with reference to the drawings, in which the same reference numerals indicate the same feature. In particular,
- Figure 1 shows a common implementation of a quantum key distribution system.
- Figure 2 shows a common alignment method used for the quantum channel
- Figure 3A and 3B show the general principle of the invention.
- Figure 4 shows an example of a graph according to Graph's theory used in the present invention to create a Hamiltonian-cyclic pattern.
- Figure 5 shows the method according to a preferred embodiment of the present invention

### Detailed Description

The invention will be described, for better understanding, with reference to specific embodiments. It will however be understood that the invention is not limited to the embodiments herein described but is rather defined by the claims and encompasses all embodiments which are within the scope of the claims.

The general structure of the invention is shown in figure 3A and 3B and mainly consists in a transmitter and a receiver which are communicating through a service channel and a quantum channel.

As shown in figure 3A, the respective indices of the signals in both channels need to be aligned. For this reason, the transmitter (010) sends a sequence of in total *n* signals over the quantum channel (160) with attributed indices 1, 2, ..., *n* as shown in Figure 3A which have to be detected by the receiver (100) to measure the offset between the sending time index and the receiving time index with respect to the service channel (150) clock signals (151) to achieve alignment.

In order to do so, the receiver (100) must recognize the pattern encoded on the received quantum channel signals (161). For this reason, the transmitter (010) sends repeatedly a sequence having a Hamilton-Cyclic pattern such as exemplarily shown in figure 3B for a total sequence length of *n* = 8 quantum signals and a corresponding sub-sequence comprising *k* = 3 consecutive quantum signals. Once enough detection statistics have been obtained by the receiver that allows calculating a histogram and identifying the pattern encoded on the measured sub-sequence (of *k* = 3 consecutive quantum states), the alignment index can then be deduced from the identified unique pattern.

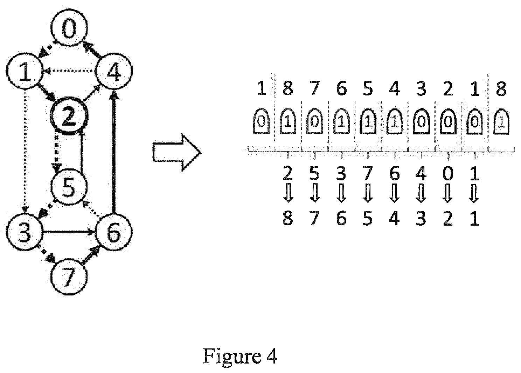

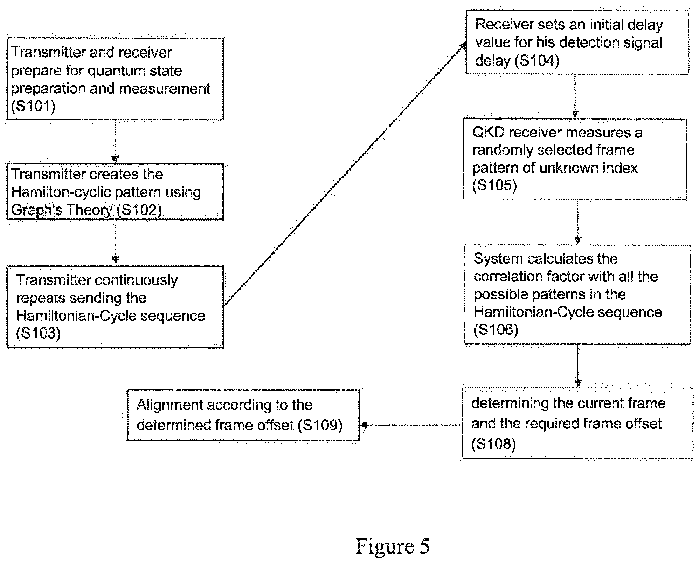

In the following, the invention description will refer to figures 4 and 5.

As explained above, the present invention consists in an alignment process between the service channel and the quantum channel in preparation of quantum communication at start-up phase, when the emitter and the receiver have to align the indices of quantum states, or during the actual operational communication process when a desynch between that transmitter and receiver system has occurred, for example but not limited to, due to a sudden and considerable change in fiber length caused by rerouting the optical signals by an optical switch.

In this process the transmitter produces a sequence presenting an alignment pattern which is generated in such a way that the pattern of a sub-sequence at any starting point is unique within the whole sequence so as to present a Hamilton-Cyclic pattern sequence. Consequently, the measurement of a single pattern gives a direct indication of the current position within the train of quantum states since each pattern is uniquely linked to a specific position index within the sequence of quantum states. In other word, since each pattern is unique, when the receiver measures a specific pattern it is easy for the system to deduce when it was sent, because it was sent once only since it is unique, and therefore to align the quantum channel indices between transmitter and receiver.

To find the Hamiltonian-Cyclic pattern sequence according to the present invention, the sequence of quantum states for alignment is created by using an approach based on Graph theory for directed graphs. This is represented in figure 3 which shows an example of a creation of a Hamilton-cyclic pattern sequence of total length *n* = 2*^{k}* = 8 and a length of each sub-sequence (or pattern) that is *k* = 3. Each of the graph's vertices represents an integer number between 0 and *n* - 1 = 7 that corresponds to the possible sub-sequence patterns of length *k* if decoded binary. The directed edges of the graph represent the transition from one vertex (and its associated pattern in binary representation) to the vertices whose associated patterns in binary representation are obtained by shifting the pattern of the originating vertex one to the left and then adding a zero (solid edges) or a one (dashed edges) to the rightmost digit. Therefore, each vertex in the graph has two incoming edges from the two integers that can result in the integer of the vertex by shifting left and adding a zero (for even integers) or a one (for odd integers) to the rightmost digit, as well as two outgoing vertices to the two integers that result by shifting left and adding a zero or a one to the rightmost digit of the integer of the vertex.

The desired sequence is then obtained by determining a so-called Hamiltonian-Cycle of this graph, as per Figure 4. A Hamilton-Cycle is a closed loop of distinct edges through the graph in which each vertex appears exactly once. Since a Hamiltonian-Cycle can start at any vertex, multiple Hamiltonian Cycles exists for a given graph. The final sequence is then derived by taking the binary representation of the integer of the starting vertex (the bold bordered ∘;2 in Figure 4) and adding a zero (for solid edges) or one (for dashed edges) to the right while following the Hamiltonian cycle through the graph (indicated by the bold edges in Figure 4).

Accordingly, the present invention actually mainly refers to the use of Hamilton-cyclic patterns, as shown in Figure 5, and the general alignment method preferably comprises the following steps to completely align the quantum communication transmitter and receiver:
1. The quantum communication transmitter and receiver prepare for the quantum state preparation and measurement S101, including setting the bias voltage of the state preparation modulator, e.g. an intensity modulator, setting the photon number per quantum state, cooling down the single photon detectors, and setting the detectors' bias voltages.
2. The quantum communication transmitter creates S102 and continuously repeats sending above's Hamiltonian-Cyclic sequence S103.
3. The quantum communication receiver sets an initial delay value for his detection signal fine-delay S104, and
4. The quantum communication receiver measures a arbritary selected frame pattern of unknown index S105.

When sufficiently many detections have been accumulated, the quantum communication receiver changes the fine-delay for the detection signals and repeats step 4 while adjusting the fine-delay value.

For all detection patterns that the quantum communication receiver obtains during the delay scan, it calculates the correlation coefficient between the measured pattern and every possible pattern in the Hamiltonian-Cycle sequence S106. The result with the highest correlation coefficient then determines the optimal fine-delay value, i.e. the required frame offset, as well as the current frame, i.e. the position in the sequence and therefore, the alignment index S108.

This in the end permits synchronization according to the determined frame offset S109.

If a second detector is implemented that has to be aligned independent of the first, e.g. a monitor detector that measures the interference visibility after an interferometer, then the transmitter and receiver repeat steps 2-4 using the Hamilton-Cycle for the monitor detector.

According to a preferred embodiment of the present invention, a pattern consists of *k* = 10 consecutive quantum states, which results in a Hamiltonian-Cyclic sequence of length *n* = 2¹⁰ = 1024 in total. Note that in general there are multiple possible Hamilton-Cycles, and it suffices to continue with only one.

As an example, one can have the resulting pattern sequence of length 1024 signals which is shown below where 0 and 1 correspond to one of two possible quantum states, respectively:

It can be verified that each individual pattern of 10 consecutive signals is unique within this sequence. The following table lists the starting index and the integer number (in bold) that corresponds to the pattern of 10 consecutive quantum states starting at this index:

| | | | | | | | | | | | | | | | |
|---|---|---|---|---|---|---|---|---|---|---|---|---|---|---|---|
| 1 | **513** | 2 | **3** | 3 | **6** | 4 | **12** | 5 | **24** | 6 | **48** | 7 | **96** | 8 | **192** |
| 9 | **384** | 10 | **769** | 11 | **514** | 12 | **5** | 13 | **10** | 14 | **20** | 15 | **40** | 16 | **80** |
| 17 | **160** | 18 | **320** | 19 | **640** | 20 | **257** | 21 | **515** | 22 | **7** | 23 | **14** | 24 | **28** |
| 25 | **56** | 26 | **112** | 27 | **224** | 28 | **448** | 29 | **897** | 30 | **770** | 31 | **516** | 32 | **9** |
| 33 | **18** | 34 | **36** | 35 | **72** | 36 | **144** | 37 | **288** | 38 | **576** | 39 | **129** | 40 | **258** |
| 41 | **517** | 42 | **11** | 43 | **22** | 44 | **44** | 45 | **88** | 46 | **176** | 47 | **352** | 48 | **704** |
| 49 | **385** | 50 | **771** | 51 | **518** | 52 | **13** | 53 | **26** | 54 | **52** | 55 | **104** | 56 | **208** |
| 57 | **416** | 58 | **832** | 59 | **641** | 60 | **259** | 61 | **519** | 62 | **15** | 63 | **30** | 64 | **60** |
| 65 | **120** | 66 | **240** | 67 | **480** | 68 | **961** | 69 | **898** | 70 | **772** | 71 | **520** | 72 | **17** |
| 73 | **34** | 74 | **68** | 75 | **136** | 76 | **272** | 77 | **544** | 78 | **65** | 79 | **130** | 80 | **260** |
| 81 | **521** | 82 | **19** | 83 | **38** | 84 | **76** | 85 | **152** | 86 | **304** | 87 | **608** | 88 | **193** |
| 89 | **386** | 90 | **773** | 91 | **522** | 92 | **21** | 93 | **42** | 94 | **84** | 95 | **168** | 96 | **336** |
| 97 | **672** | 98 | **321** | 99 | **642** | 100 | **261** | 101 | **523** | 102 | **23** | 103 | **46** | 104 | **92** |
| 105 | **184** | 106 | **368** | 107 | **736** | 108 | **449** | 109 | **899** | 110 | **774** | 111 | **524** | 112 | **25** |
| 113 | **50** | 114 | **100** | 115 | **200** | 116 | **400** | 117 | **800** | 118 | **577** | 119 | **131** | 120 | **262** |
| 121 | **525** | 122 | **27** | 123 | **54** | 124 | **108** | 125 | **216** | 126 | **432** | 127 | **864** | 126 | **705** |
| 129 | **387** | 130 | **775** | 131 | **526** | 132 | **29** | 133 | **58** | 134 | **116** | 135 | **232** | 136 | **464** |
| 137 | **928** | 136 | **833** | 139 | **643** | 140 | **263** | 141 | **527** | 142 | **31** | 143 | **62** | 144 | **124** |
| 145 | **248** | 146 | **496** | 147 | **993** | 148 | **962** | 149 | **900** | 150 | **776** | 151 | **528** | 152 | **33** |
| 153 | **66** | 154 | **132** | 155 | **264** | 156 | **529** | 157 | **35** | 158 | **70** | 159 | **140** | 160 | **280** |
| 161 | **560** | 162 | **97** | 163 | **194** | 164 | **388** | 165 | **777** | 166 | **530** | 167 | **37** | 168 | **74** |
| 169 | **148** | 170 | **296** | 171 | **592** | 172 | **161** | 173 | **322** | 174 | **644** | 175 | **265** | 176 | **531** |
| 177 | **39** | 178 | **78** | 179 | **156** | 180 | **312** | 181 | **624** | 182 | **225** | 183 | **450** | 184 | **901** |
| 185 | **778** | 186 | **532** | 187 | **41** | 188 | **82** | 169 | **164** | 190 | **328** | 191 | **656** | 192 | **289** |
| 193 | **578** | 194 | **133** | 195 | **266** | 196 | **533** | 197 | **43** | 198 | **86** | 199 | **172** | 200 | **344** |
| 201 | **688** | 202 | **353** | 203 | **706** | 204 | **389** | 205 | **779** | 206 | **534** | 207 | **45** | 208 | **90** |
| 209 | **180** | 210 | **360** | 211 | **720** | 212 | **417** | 213 | **834** | 214 | **645** | 215 | **267** | 216 | **535** |
| 217 | **47** | 218 | **94** | 219 | **188** | 220 | **376** | 221 | **752** | 222 | **481** | 223 | **963** | 224 | **902** |
| 225 | **780** | 226 | **536** | 227 | **49** | 228 | **98** | 229 | **196** | 230 | **392** | 231 | **784** | 232 | **545** |
| 233 | **67** | 234 | **134** | 235 | **268** | 236 | **537** | 237 | **51** | 238 | **102** | 239 | **204** | 240 | **408** |
| 241 | **816** | 242 | **609** | 243 | **195** | 244 | **390** | 245 | **781** | 246 | **538** | 247 | **53** | 248 | **106** |
| 249 | **212** | 250 | **424** | 251 | **848** | 252 | **673** | 253 | **323** | 254 | **646** | 255 | **269** | 256 | **539** |
| 257 | **55** | 258 | **110** | 259 | **220** | 260 | **440** | 261 | **880** | 262 | **737** | 263 | **451** | 264 | **903** |
| 265 | **782** | 266 | **540** | 267 | **57** | 268 | **114** | 269 | **228** | 270 | **456** | 271 | **912** | 272 | **801** |
| 273 | **579** | 274 | **135** | 275 | **270** | 276 | **541** | 277 | **59** | 278 | **118** | 279 | **236** | 280 | **472** |
| 281 | **944** | 282 | **865** | 283 | **707** | 284 | **391** | 285 | **783** | 286 | **542** | 287 | **61** | 288 | **122** |
| 269 | **244** | 290 | **488** | 291 | **976** | 292 | **929** | 293 | **835** | 294 | **647** | 295 | **271** | 296 | **543** |
| 297 | **63** | 299 | **126** | 299 | **252** | 300 | **504** | 301 | **1009** | 302 | **994** | 303 | **964** | 304 | **904** |
| 305 | **785** | 306 | **546** | 307 | **69** | 308 | **138** | 309 | **276** | 310 | **552** | 311 | **81** | 312 | **162** |
| 313 | **324** | 314 | **648** | 315 | **273** | 316 | **547** | 317 | **71** | 318 | **142** | 319 | **284** | 320 | **568** |
| 321 | **113** | 322 | **226** | 323 | **452** | 324 | **905** | 325 | **786** | 326 | **548** | 327 | **73** | 328 | **146** |
| 329 | **292** | 330 | **584** | 331 | **145** | 332 | **290** | 333 | **580** | 334 | **137** | 335 | **274** | 336 | **549** |
| 337 | **75** | 338 | **150** | 339 | **300** | 340 | **600** | 341 | **177** | 342 | **354** | 343 | **708** | 344 | **393** |
| 345 | **787** | 346 | **550** | 347 | **77** | 348 | **154** | 349 | **308** | 350 | **616** | 351 | **209** | 352 | **418** |
| 353 | **836** | 354 | **649** | 355 | **275** | 356 | **551** | 357 | **79** | 358 | **158** | 359 | **316** | 360 | **632** |
| 361 | **241** | 362 | **482** | 363 | **965** | 364 | **906** | 365 | **788** | 366 | **553** | 367 | **83** | 368 | **166** |
| 369 | **332** | 370 | **664** | 371 | **305** | 372 | **610** | 373 | **197** | 374 | **394** | 375 | **789** | 376 | **554** |
| 377 | **85** | 378 | **170** | 379 | **340** | 380 | **680** | 381 | **337** | 382 | **674** | 383 | **325** | 384 | **650** |
| 385 | **277** | 386 | **555** | 387 | **87** | 388 | **174** | 389 | **348** | 390 | **696** | 391 | **369** | 392 | **738** |
| 393 | **453** | 394 | **907** | 395 | **790** | 396 | **556** | 397 | **89** | 398 | **178** | 399 | **356** | 400 | **712** |
| 401 | **401** | 402 | **802** | 403 | **581** | 404 | **139** | 405 | **278** | 406 | **557** | 407 | **91** | 408 | **182** |
| 409 | **364** | 410 | **728** | 411 | **433** | 412 | **866** | 413 | **709** | 414 | **395** | 415 | **791** | 416 | **558** |
| 417 | **93** | 418 | **186** | 419 | **372** | 420 | **744** | 421 | **465** | 422 | **930** | 423 | **837** | 424 | **651** |
| 425 | **279** | 426 | **559** | 427 | **95** | 428 | **190** | 429 | **380** | 430 | **760** | 431 | **497** | 432 | **995** |
| 433 | **966** | 434 | **908** | 435 | **792** | 436 | **561** | 437 | **99** | 438 | **198** | 439 | **396** | 440 | **793** |
| 441 | **562** | 442 | **101** | 443 | **202** | 444 | **404** | 445 | **808** | 446 | **593** | 447 | **163** | 448 | **326** |
| 449 | **652** | 450 | **281** | 451 | **563** | 452 | **103** | 453 | **206** | 454 | **412** | 455 | **824** | 456 | **625** |
| 457 | **227** | 458 | **454** | 459 | **909** | 460 | **794** | 461 | **564** | 462 | **105** | 463 | **210** | 464 | **420** |
| 465 | **840** | 466 | **657** | 467 | **291** | 468 | **562** | 469 | **141** | 470 | **282** | 471 | **565** | 472 | **107** |
| 473 | **214** | 474 | **428** | 475 | **856** | 476 | **689** | 477 | **355** | 478 | **710** | 479 | **397** | 480 | **795** |
| 481 | **566** | 482 | **109** | 483 | **218** | 484 | **436** | 485 | **872** | 486 | **721** | 487 | **419** | 488 | **836** |
| 489 | **653** | 490 | **283** | 491 | **567** | 492 | **111** | 493 | **222** | 494 | **444** | 495 | **888** | 496 | **753** |
| 497 | **483** | 498 | **967** | 499 | **910** | 500 | **796** | 501 | **569** | 502 | **115** | 503 | **230** | 504 | **460** |
| 505 | **920** | 506 | **817** | 507 | **611** | 508 | **199** | 509 | **398** | 510 | **797** | 511 | **570** | 512 | **117** |
| 513 | **234** | 514 | **468** | 515 | **936** | 516 | **849** | 517 | **675** | 518 | **327** | 519 | **654** | 520 | **285** |
| 521 | **571** | 522 | **119** | 523 | **238** | 524 | **476** | 525 | **952** | 526 | **881** | 527 | **739** | 528 | **455** |
| 529 | **911** | 530 | **798** | 531 | **572** | 532 | **121** | 533 | **242** | 534 | **484** | 535 | **968** | 536 | **913** |
| 537 | **803** | 538 | **583** | 539 | **143** | 540 | **286** | 541 | **573** | 542 | **123** | 543 | **246** | 544 | **492** |
| 545 | **984** | 546 | **945** | 547 | **867** | 548 | **711** | 549 | **399** | 550 | **799** | 551 | **574** | 552 | **125** |
| 553 | **250** | 554 | **500** | 555 | **1000** | 556 | **977** | 557 | **931** | 558 | **839** | 559 | **655** | 560 | **287** |
| 561 | **575** | 562 | **127** | 563 | **254** | 564 | **508** | 565 | **1017** | 566 | **1010** | 567 | **996** | 568 | **969** |
| 569 | **914** | 570 | **804** | 571 | **585** | 572 | **147** | 573 | **294** | 574 | **588** | 575 | **153** | 576 | **306** |
| 577 | **612** | 578 | **201** | 579 | **402** | 580 | **805** | 581 | **586** | 582 | **149** | 583 | **298** | 584 | **596** |
| 585 | **169** | 586 | **338** | 587 | **676** | 588 | **329** | 589 | **658** | 590 | **293** | 591 | **587** | 592 | **151** |
| 593 | **302** | 594 | **604** | 595 | **185** | 596 | **370** | 597 | **740** | 598 | **457** | 599 | **915** | 600 | **806** |
| 601 | **589** | 602 | **155** | 603 | **310** | 604 | **620** | 605 | **217** | 606 | **434** | 607 | **868** | 608 | **713** |
| 609 | **403** | 610 | **807** | 611 | **590** | 612 | **157** | 613 | **314** | 614 | **628** | 615 | **233** | 616 | **466** |
| 617 | **932** | 618 | **841** | 619 | **659** | 620 | **295** | 621 | **591** | 622 | **159** | 623 | **318** | 624 | **636** |
| 625 | **249** | 626 | **498** | 627 | **997** | 628 | **970** | 629 | **916** | 630 | **809** | 631 | **594** | 632 | **165** |
| 633 | **330** | 634 | **660** | 635 | **297** | 636 | **595** | 637 | **167** | 636 | **334** | 639 | **668** | 640 | **313** |
| 641 | **626** | 642 | **229** | 643 | **458** | 644 | **917** | 645 | **810** | 646 | **597** | 647 | **171** | 648 | **342** |
| 649 | **684** | 650 | **345** | 651 | **690** | 652 | **357** | 653 | **714** | 654 | **405** | 655 | **811** | 656 | **598** |
| 657 | **173** | 658 | **346** | 659 | **692** | 660 | **361** | 661 | **722** | 662 | **421** | 663 | **842** | 664 | **661** |
| 665 | **299** | 666 | **599** | 667 | **175** | 668 | **350** | 669 | **700** | 670 | **377** | 671 | **754** | 672 | **485** |
| 673 | **971** | 674 | **918** | 675 | **812** | 676 | **601** | 677 | **179** | 678 | **358** | 679 | **716** | 680 | **409** |
| 681 | **818** | 662 | **613** | 683 | **203** | 684 | **406** | 685 | **813** | 686 | **602** | 687 | **181** | 688 | **362** |
| 689 | **724** | 690 | **425** | 691 | **850** | 692 | **677** | 693 | **331** | 694 | **662** | 695 | **301** | 696 | **603** |
| 697 | **183** | 698 | **366** | 699 | **732** | 700 | **441** | 701 | **882** | 702 | **741** | 703 | **459** | 704 | **919** |
| 705 | **814** | 706 | **605** | 707 | **187** | 708 | **374** | 709 | **748** | 710 | **473** | 711 | **946** | 712 | **869** |
| 713 | **715** | 714 | **407** | 715 | **815** | 716 | **606** | 717 | **189** | 718 | **378** | 719 | **756** | 720 | **489** |
| 721 | **978** | 722 | **933** | 723 | **843** | 724 | **663** | 725 | **303** | 726 | **607** | 727 | **191** | 728 | **382** |
| 729 | **764** | 730 | **505** | 731 | **1011** | 732 | **998** | 733 | **972** | 734 | **921** | 735 | **819** | 736 | **614** |
| 737 | **205** | 738 | **410** | 739 | **820** | 740 | **617** | 741 | **211** | 742 | **422** | 743 | **844** | 744 | **665** |
| 745 | **307** | 746 | **615** | 747 | **207** | 748 | **414** | 749 | **828** | 750 | **633** | 751 | **243** | 752 | **486** |
| 753 | **973** | 754 | **922** | 755 | **821** | 756 | **618** | 757 | **213** | 758 | **426** | 759 | **852** | 760 | **681** |
| 761 | **339** | 762 | **678** | 763 | **333** | 764 | **666** | 765 | **309** | 766 | **619** | 767 | **215** | 768 | **430** |
| 769 | **860** | 770 | **697** | 771 | **371** | 772 | **742** | 773 | **461** | 774 | **923** | 775 | **822** | 776 | **621** |
| 777 | **219** | 778 | **438** | 779 | **876** | 780 | **729** | 781 | **435** | 782 | **870** | 783 | **717** | 784 | **411** |
| 785 | **823** | 786 | **622** | 787 | **221** | 788 | **442** | 789 | **884** | 790 | **745** | 791 | **467** | 792 | **934** |
| 793 | **845** | 794 | **667** | 795 | **311** | 796 | **623** | 797 | **223** | 798 | **446** | 799 | **892** | 800 | **761** |
| 801 | **499** | 802 | **999** | 803 | **974** | 804 | **924** | 805 | **825** | 806 | **627** | 807 | **231** | 808 | **462** |
| 809 | **925** | 810 | **826** | 811 | **629** | 812 | **235** | 813 | **470** | 814 | **940** | 815 | **857** | 816 | **691** |
| 817 | **359** | 818 | **718** | 819 | **413** | 820 | **827** | 821 | **630** | 822 | **237** | 823 | **474** | 824 | **948** |
| 825 | **873** | 826 | **723** | 827 | **423** | 828 | **846** | 829 | **669** | 830 | **315** | 831 | **631** | 832 | **239** |
| 833 | **478** | 634 | **956** | 835 | **889** | 836 | **755** | 837 | **487** | 838 | **975** | 839 | **926** | 840 | **829** |
| 841 | **634** | 842 | **245** | 843 | **490** | 844 | **980** | 845 | **937** | 846 | **851** | 847 | **679** | 848 | **335** |
| 849 | **670** | 850 | **317** | 851 | **635** | 852 | **247** | 853 | **494** | 854 | **988** | 855 | **953** | 856 | **883** |
| 857 | **743** | 858 | **463** | 859 | **927** | 860 | **830** | 861 | **637** | 862 | **251** | 863 | **502** | 864 | **1004** |
| 865 | **985** | 866 | **947** | 867 | **871** | 868 | **719** | 869 | **415** | 870 | **831** | 871 | **638** | 872 | **253** |
| 873 | **506** | 874 | **1012** | 875 | **1001** | 876 | **979** | 877 | **935** | 878 | **847** | 879 | **671** | 880 | **319** |
| 881 | **639** | 882 | **255** | 883 | **510** | 884 | **1021** | 885 | **1018** | 886 | **1013** | 887 | **1002** | 888 | **981** |
| 889 | **938** | 890 | **853** | 891 | **682** | 892 | **341** | 893 | **683** | 894 | **343** | 895 | **686** | 896 | **349** |
| 897 | **698** | 898 | **373** | 899 | **746** | 900 | **469** | 901 | **939** | 902 | **854** | 903 | **685** | 904 | **347** |
| 905 | **694** | 906 | **365** | 907 | **730** | 908 | **437** | 909 | **874** | 910 | **725** | 911 | **427** | 912 | **855** |
| 913 | **687** | 914 | **351** | 915 | **702** | 916 | **381** | 917 | **762** | 918 | **501** | 919 | **1003** | 920 | **962** |
| 921 | **941** | 922 | **858** | 923 | **693** | 924 | **363** | 925 | **726** | 926 | **429** | 927 | **859** | 928 | **695** |
| 929 | **367** | 930 | **734** | 931 | **445** | 932 | **890** | 933 | **757** | 934 | **491** | 935 | **983** | 936 | **942** |
| 937 | **861** | 938 | **699** | 939 | **375** | 940 | **750** | 941 | **477** | 942 | **954** | 943 | **885** | 944 | **747** |
| 945 | **471** | 946 | **943** | 947 | **862** | 948 | **701** | 949 | **379** | 950 | **758** | 951 | **493** | 952 | **986** |
| 953 | **949** | 954 | **875** | 955 | **727** | 956 | **431** | 957 | **863** | 958 | **703** | 959 | **383** | 960 | **766** |
| 961 | **509** | 962 | **1019** | 963 | **1014** | 964 | **1005** | 965 | **987** | 966 | **950** | 967 | **877** | 968 | **731** |
| 969 | **439** | 970 | **876** | 971 | **733** | 972 | **443** | 973 | **886** | 974 | **749** | 975 | **475** | 976 | **951** |
| 977 | **879** | 978 | **735** | 979 | **447** | 980 | **894** | 981 | **765** | 982 | **507** | 983 | **1015** | 984 | **1006** |
| 985 | **989** | 986 | **955** | 987 | **887** | 988 | **751** | 989 | **479** | 990 | **958** | 991 | **893** | 992 | **763** |
| 993 | **503** | 994 | **1007** | 995 | **990** | 996 | **957** | 997 | **891** | 998 | **759** | 999 | **495** | 1000 | **991** |
| 1001 | **959** | 1002 | **895** | 1003 | **767** | 1004 | **511** | 1005 | **1023** | 1006 | **1022** | 1007 | **1020** | 1008 | **1016** |
| 1009 | **1008** | 1010 | **992** | 1011 | **960** | 1012 | **896** | 1013 | **768** | 1014 | **512** | 1015 | **0** | 1016 | **1** |
| 1017 | **2** | 1018 | **4** | 1019 | **8** | 1020 | **16** | 1021 | **32** | 1022 | **64** | 1023 | **128** | 1024 | **256** |

As can be seen from in this example above, starting at any arbitrary index the obtained patterns are all unique and are therefore easily recognized and distinguished by the receiver.

In some embodiments, the quantum channel signals encode the quantum channel information in the amplitude of optical pulses, and a binary zero in the Hamilton-Cyclic sequence then corresponds to a vacuum signal, i.e. sending no light pulse, while a binary one in the Hamilton-Cyclic sequence corresponds to an optical pulse with an amplitude larger than zero, and typically smaller than 1 photon per pulse. The receiver can perform two possible measurements, the first one being a simple time-of-arrival measurement, and the second one being a measurement of interference visibility using an imbalanced interferometer, with an imbalance corresponding exactly to the temporal separation between consecutive quantum states. The alignment of the indices of the time-of-arrival measurement can be determined using the Hamiltonian-cyclic pattern as described before. However, after the imbalanced interferometer, the above derived sequence no longer constitutes a Hamilton-Cycle, and no such sequence remains a Hamilton-Cycle simultaneously for both, the time-of-arrival measurement and the interferometric measurement. Hence, a separate but similar sequence as above has to be derived for the monitor path. This is achieved by comparing two subsequent states in the original Hamilton-Cyclic sequence for the time-of-arrival measurement and preparing a state 0 whenever two subsequent states are the same and preparing a state 1 whenever two subsequent states in the original sequence are different. This results in the following sequence that allows index alignment after the imbalanced interferometer:

After an imbalanced interferometer, this sequence results in the same pattern as the initial Hamilton-Cyclic sequence.

While the embodiments have been described in conjunction with a number of embodiments, it is evident that many alternatives, modifications and variations would be or are apparent to those of ordinary skill in the applicable arts. Accordingly, this disclosure is intended to embrace all such alternatives, modifications, equivalents and variations that are within the scope of this disclosure. This for example particularly the case regarding the type of quantum communication which can be used, the number of frames, the length of the sequence, and so on.

## Claims

1. Synchronization method to be implemented in a quantum communication system comprising a transmitter and a receiver adapted to communicate through a service channel and a quantum channel, said method being adapted to align the indices of the signals sent in both channels and comprising the steps of:
• producing (S102), at the transmitter, a sequence of *n* quantum channel signals, wherein the pattern of each arbitrary sub-sequence made of *k* consecutive quantum channel signals within the whole sequence of *n* quantum channel signals is unique in the whole sequence such that said whole sequence presents a Hamilton-cyclic pattern,
• repeatedly sending (S103) said sequence from the transmitter over the quantum channel to the receiver,
• detecting the pattern (105) of the sub-sequence that starts from a arbitrary selected starting index of said sequence,
• calculating (S106) the correlation factors between the pattern of detected sub-sequence and all the possible patterns in the Hamiltonian-Cycle sequence, and
• determining (S107) the current sub-sequence and its corresponding sub-sequence offset based on the pattern with the highest correlation factor, and
• aligning (S109) the indices of the emitter and the receiver based on the determined offset.

2. Synchronization method according to claim 1, **characterized in that** each quantum channel signal is a quantum state.

3. Synchronization method according to any of the preceding claims, **characterized in that** it further comprises a preparation start-up phase (S101) where the transmitter and receiver prepare for the quantum channel signals' state preparation and measurement before the production step (S102).

4. Synchronization method according to any of the preceding claims, **characterized in that** it further comprises an initial delay value setting step (S104) before the detecting step (105) where the receiver sets an initial delay value for his detection signal delay (S104).

5. Synchronization method according to any of the preceding claims, **characterized in that** it is carried out upon clock synchronization at start-up phase.

6. Synchronization method according to any of the preceding claims, **characterized in that** *n* = *2^{k}.*

7. Synchronization method according to any of the preceding claims, **characterized in that** *k* = 10.

8. Synchronization method according to any of the preceding claims, **characterized in that** the sequence of quantum channel signals is created by using the Graph theory for directed graphs.

9. Synchronization method according to any of the preceding claims, **characterized in that** it is an alignment method.

10. Quantum communication device comprising a transmitter and a receiver adapted to communicate through a service channel and a quantum channel and adapted to carry out the method of any one of claims 1-9.

11. Quantum communication device according to claim 10 **characterized in that** it carries out QKD.

## Patentansprüche

1. Synchronisationsverfahren zur Implementierung in einem Quanten-Kommunikationssystem, das einen Sender und einen Empfänger umfasst, die dazu geeignet sind, über einen Dienstkanal und einen Quantenkanal zu kommunizieren, wobei das Verfahren dazu geeignet ist, die Indizes der gesendeten Signale in beiden Kanälen auszurichten, und die Schritte umfasst:
- Produzieren (S102) einer Sequenz von n Quantenkanal-Signalen an dem Sender, wobei die Muster jeder beliebigen Teilsequenz, die aus k aufeinanderfolgenden Quantenkanal-Signalen innerhalb der gesamten Sequenz von n Quantenkanal-Signalen besteht, in der gesamten Sequenz einzigartig ist, und die gesamte Sequenz ein Hamilton-Kreis-Muster ist,
- wiederholtes Senden (S103) der Sequenz von dem Sender über den Quantenkanal an den Empfänger,
- Erfassen des Musters (105) der Teilsequenz, die an einem beliebig ausgewählten Start-Index der Sequenz beginnt,
- Berechnen (S106) der Korrelationsfaktoren zwischen dem Muster der erfassten Teilsequenz und allen der möglichen Muster in der Hamilton-Kreis-Sequenz, und
- Bestimmen (S107) der aktuellen Teilsequenz und ihres entsprechenden Teilsequenz-Offsets auf Grundlage der Muster mit dem höchsten Korrelationsfaktor und
- Ausrichten (S109) der Indizes des Senders und des Empfängers auf Grundlage des bestimmten Offsets.

2. Synchronisationsverfahren nach Anspruch 1, **dadurch gekennzeichnet, dass** jedes Quantenkanal-Signal ein Quantenzustand ist.

3. Synchronisationsverfahren nach einem der vorhergehenden Ansprüche, **dadurch gekennzeichnet, dass** es ferner eine Vorbereitungs-Start-Phase (S101) umfasst, in welcher sich der Sender und der Empfänger für die Zustandsvorbereitung und - messung der Quantenkanal-Signale vor dem Herstellungsschritt (S102) vorbereiten.

4. Synchronisationsverfahren nach einem der vorhergehenden Ansprüche, **dadurch gekennzeichnet, dass** es ferner vor dem Erfassungsschritt (105) einen Schritt (S104) zur Einstellung eines anfänglichen Verzögerungswerts umfasst, in dem der Empfänger einen anfänglichen Verzögerungswert für seine Erfassungs-Signal-Verzögerung (S104) einstellt.

5. Synchronisationsverfahren nach einem der vorhergehenden Ansprüche, **dadurch gekennzeichnet, dass** es nach der Taktgeber-Synchronisation in der Start-Phase ausgeführt wird.

6. Synchronisationsverfahren nach einem der vorhergehenden Ansprüche, **dadurch gekennzeichnet, dass** n = 2*^{k}*.

7. Synchronisationsverfahren nach einem der vorhergehenden Ansprüche, **dadurch gekennzeichnet, dass** *k* = 10.

8. Synchronisationsverfahren nach einem der vorhergehenden Ansprüche, **dadurch gekennzeichnet, dass** die Sequenz von Quantenkanal-Signalen unter Verwendung der Graphentheorie für gerichtete Graphen geschaffen wird.

9. Synchronisationsverfahren nach einem der vorhergehenden Ansprüche, **dadurch gekennzeichnet, dass** es ein Ausrichtungsverfahren ist.

10. Quanten-Kommunikationsvorrichtung umfassend einen Sender und einen Empfänger, die dazu geeignet sind, über einen Dienstkanal und einen Quantenkanal zu kommunizieren, und dazu geeignet sind, das Verfahren nach einem der Ansprüche 1 bis 9 auszuführen.

11. Quanten-Kommunikationsvorrichtung nach Anspruch 10, **dadurch gekennzeichnet, dass** sie einen Quantenschlüsselaustausch (QKD) ausführt.

## Revendications

1. Procédé de synchronisation à mettre en œuvre dans un système de communication quantique comprenant un émetteur et un récepteur adaptés pour communiquer via un canal de service et un canal quantique, ledit procédé étant adapté pour aligner les indices des signaux envoyés dans les deux canaux et comprenant les étapes consistant à :
• produire (S102), au niveau de l'émetteur, une séquence de n signaux de canal quantique, où le motif de chaque sous-séquence arbitraire constituée de k signaux de canal quantique consécutifs dans la séquence entière de n signaux de canal quantique est unique dans la séquence entière de sorte que ladite séquence entière présente un motif cyclique de Hamilton,
• envoyer de manière répétée (S103) ladite séquence de l'émetteur sur le canal quantique au récepteur,
• détecter le motif (105) de la sous-séquence qui commence à partir d'un indice de départ sélectionné arbitrairement de ladite séquence,
• calculer (S106) les facteurs de corrélation entre le motif de sous-séquence détectée et tous les motifs possibles dans la séquence du cycle hamiltonien, et
• déterminer (S107) la sous-séquence actuelle et son décalage de sous-séquence correspondant sur la base du motif avec le facteur de corrélation le plus élevé, et
• aligner (S109) les indices de l'émetteur et du récepteur sur la base du décalage déterminé.

2. Procédé de synchronisation selon la revendication 1, **caractérisé en ce que** chaque signal de canal quantique est un état quantique.

3. Procédé de synchronisation selon l'une des revendications précédentes, **caractérisé en ce qu'**il comprend en outre une phase de démarrage de préparation (S101) où l'émetteur et le récepteur se préparent pour la préparation et la mesure de l'état de signaux de canal quantique avant l'étape de production (S102).

4. Procédé de synchronisation selon l'une des revendications précédentes, **caractérisé en ce qu'**il comprend en outre une étape de réglage de valeur de retard initiale (S104) avant l'étape de détection (105) où le récepteur règle une valeur de retard initiale pour son retard de signal de détection (S104).

5. Procédé de synchronisation selon l'une des revendications précédentes, **caractérisé en ce qu'**il est réalisé lors de la synchronisation d'horloge à la phase de démarrage.

6. Procédé de synchronisation selon l'une des revendications précédentes, **caractérisé en ce que** *n* = 2 *^{k}*.

7. Procédé de synchronisation selon l'une des revendications précédentes, **caractérisé en ce que** *k* = 10.

8. Procédé de synchronisation selon l'une des revendications précédentes, **caractérisé en ce que** la séquence de signaux de canal quantique est créée en utilisant la théorie des graphes pour des graphes orientés.

9. Procédé de synchronisation selon l'une des revendications précédentes, **caractérisé en ce qu'**il s'agit d'un procédé d'alignement.

10. Dispositif de communication quantique comprenant un émetteur et un récepteur adaptés pour communiquer via un canal de service et un canal quantique et adapté pour réaliser le procédé de l'une quelconque des revendications 1 à 9.

11. Dispositif de communication quantique selon la revendication 10 **caractérisé en ce qu'**il réalise une QKD.
